# EUROPEAN PATENT SPECIFICATION

(11) **EP 2 659 583 B1**
(45) Date of publication and mention of the grant of the patent: **05.08.2015**
(21) Application number: 11802682.2
(22) Date of filing: 07.12.2011
(51) Int. Cl.: H02P 21/00, D06F 37/30, D06F 39/00, H02P 21/14

(54) **PERMANENT MAGNET SYNCHRONOUS MOTOR CONTROL CIRCUIT**
STEUERSCHALTUNG FÜR PERMANENTMAGNET-SYNCHRONMOTOR
CIRCUIT DE COMMANDE DE MOTEUR SYNCHRONE À AIMANTS PERMANENTS

(30) Priority: 29.12.2010 TR 201011100
(43) Date of publication of application: 06.11.2013
(73) Proprietor: Arçelik Anonim Sirketi, 34950 Istanbul (TR)
(72) Inventor: ERENAY, Hayri Kerem, 34950 Istanbul (TR)
(86) International application number: PCT/EP2011/072050
(87) International publication number: WO 2012/089466

(56) References cited:
- US-A1- 2002 189 301
- US-A1- 2005 160 771

## Description

The present invention relates to a control circuit that controls a permanent magnet synchronous motor (PMSM) used in driving the drum in washing machines.

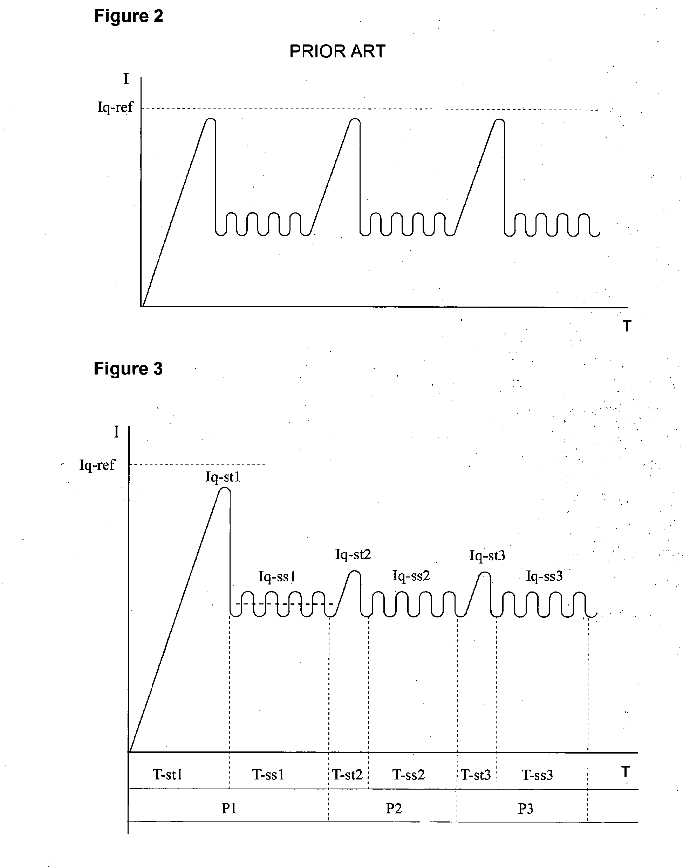

The permanent magnet synchronous motors are preferred for driving the drum of the washing machine in variable speeds and variable directions in the washing and spin-drying steps because they perform with high efficiency and performance and without noise. The permanent magnet synchronous motors have generally three-phase configuration and are driven with the drive method wherein the phase currents are in sinusoidal wave form. The position of the rotor rotating inside the stator and the rotational speed with respect to the rotor position should be known for the control of permanent magnet synchronous motors. According to the data of rotor position, rotation moment in the rotor is formed by energizing the stator windings at suitable times and the rotor is provided to start up and rotate at the desired speed. Generally Hall type position sensors are used in electric motors in order to detect the position of the rotor and the speed by processing the position data. The position sensors cause labor and material costs to increase in the production of the electric motor. Therefore, in the state of the art, Field oriented Control (FOC) method is developed for control of the motor. By means of the field oriented control method, the motor can be controlled without using position sensors. The motor driving the washing machine drum operates by making start up and stop movements during the washing process. In the field oriented control method, for every start up of the motor after the stop, a constant torque current (Iq-ref) is applied which is predetermined in accordance with maximum load regardless of the laundry load in the drum (Figure 2). In the washing process in the washing machine, if it is taken into consideration that the motor stops and starts 200 - 250 times in approximately 20 second periods depending on the washing program, in cases where the load amount is less than maximum, excessive amount of current is delivered to the motor unnecessarily by applying maximum start current at every start - stop thereby energy consumption increases and the working life of the motor decreases due to overheating in hard start-ups.

In the state of the art United States Patent No. US 7638959, a control circuit is explained that provides control of a brushless direct current motor operation, having an inverter that inverts electric current to three phase current, an open loop controller that provides current control of the motor with sinusoidal commutation by sending feedback signals and a closed loop controller that provides current control of the motor in high speeds with six step commutation. Documents US 2002/189301 and US2005/0160771 disclose control circuits for permanent magnet synchronous motors used in washing machines.

The aim of the present invention is the realization of a control circuit that controls a permanent magnet synchronous motor used in driving the drum in washing machines and which provides energy consumption to be decreased.

The control circuit realized in order to attain the aim of the present invention and explicated in the claims, is used in controlling the permanent magnet synchronous motor utilized in washing machines for driving the drum.

The microcontroller, included in the control circuit and wherein the data relating to the washing program is loaded, operates the drum motor during the washing program by implementing start and stop movements in more than one cycle formed of start periods and steady state operating periods wherein the motor operates at constant speed after every start period.

The microcontroller applies a current to the motor with a magnitude that can provide start up at maximum load in the initial start period of the first cycle of the washing program, monitors and measures the currents that change value depending on the load in the drum rotated by the motor, in the first steady state period after the initial start up period wherein the motor operates at constant speed.

The microcontroller provides currents to be applied to the motor in values equal or close to the values measured in the start periods of all cycles after the first cycle, in the initial steady state period or in the steady state period of the previous cycle before each cycle, until the end of the washing program.

In an embodiment of the present invention, the motor is controlled by the field oriented control method and the control circuit has an open loop controller that controls the motor in start periods and a closed loop controller that controls the motor in steady state operational periods.

The microcontroller measures the phase currents applied to the motor by the three-phase inverter by separating them into the torque component (Iq) and the flux component (Id).

The microcontroller, applies phase currents calculated according to the maximum load of the washing machine drum driven by the motor and having a reference torque component in the initial start period of the motor. The microcontroller, applies torque components to the motor in values equal or close to the torque component of the currents in the first steady state period or in the steady state period of the cycle previous to each cycle, in the start periods of all cycles after the first cycle until the end of the washing program by measuring the torque component of the phase currents applied to the motor in the steady state period of the first cycle. The microcontroller furthermore determines the start times in all cycles after the first cycle to be in direct proportion to the magnitude of the start torque components until the end of the washing program.

The control circuit of the present invention, applies the steady state current, which is determined in the first cycle depending on the drum load, to the motor in the start periods of all cycles after the first cycle in the washing program of the washing machine thereby the hard start-ups of the motor are prevented and energy saving is provided.

The control circuit realized in order to attain the aim of the present invention is illustrated in the attached figures, where:

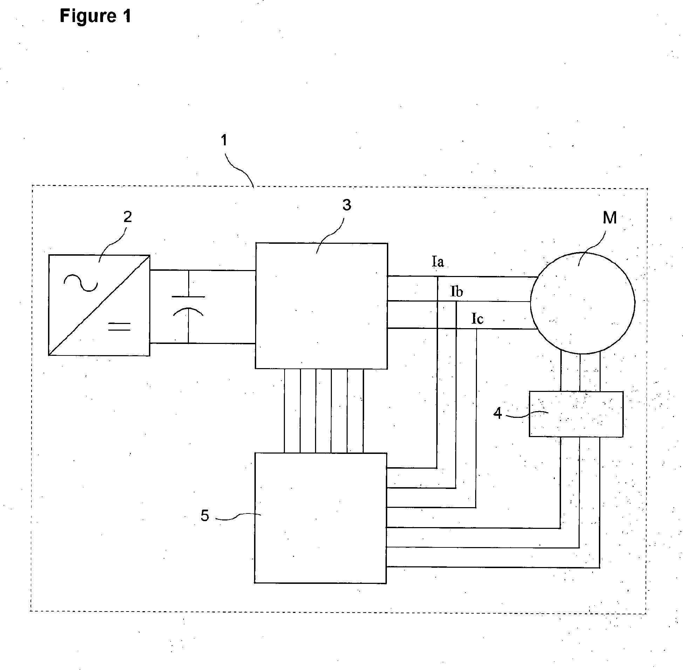

Figure 1 - is the schematic view of a motor control circuit.
Figure 2 - is the graph of the change in electric current (I) with respect to time (T) applied to the electric motor driving the drum of a washing machine in the washing program in the state of the art.
Figure 3 - is the graph of the change in electric current (I) with respect to time (T) applied to the electric motor driving the drum of a washing machine in the washing program in the embodiment of the present invention.

The elements illustrated in the figures are numbered as follows:
1 - Control circuit
2 - Converter
3 - Three-phase inverter
4 - Speed and position estimator
5 - Microcontroller

The control circuit (1) that controls the permanent magnet synchronous motor (M) used in driving the drum in washing machines comprises a converter (2) that converts AC mains voltage to DC voltage, a three-phase inverter (3) that inverts the direct current received from the converter (2) to three phase current (la, Ib, Ic), a speed and position estimator (4) that detects the data relating to position and speed of the rotor by means of voltage sensors during start and operation of the motor (M) and a microcontroller (5) that provides control of the motor (M) by sending sinusoidal switching signals to the three-phase inverter (3) with the signals received from the speed and position estimator (4).

The control circuit (1) operates the motor (M) during the performed washing program by implementing more than one cycle (P1, P2,...) formed of start periods (T-st1, Tst2, ...) wherein the motor (M) accelerates slowly with the current applied starting from the stop position and the steady state operational periods (T-ss1, T-ss2, ...) after each start period (T-st1, Tst2, ...) wherein the motor (M) operates at constant speed determined for the washing process. The control circuit (1) operates the motor (M) by implementing approximately 200 - 250 cycles (P1, P2, ..) during the washing program, and the motor (M) makes stop- start movements in every cycle (P1, P2, ...).

The microcontroller (5) provides the three-phase inverter (3) to apply current to the motor (M) with the magnitude that provides start in maximum load of the drum in the first start period (T-st1) of the first cycle (P1), and in the steady state period (T-ss1) after the first start period (T-st1) whereat the motor (M) operates at constant speed, monitors and measures the currents that change magnitude (value) depending on the load in the drum driven by the motor (M), and in the start period (T-st2) of the second cycle (P2) applies current that is of equal or close value to the current measured in the first steady state period (T-ss1).

In an embodiment of the present invention, the microcontroller (5) provides the currents that are of equal or close in value to the currents measured in the first steady state period (T-ss1), which change depending on the load in the drum driven by the motor (M), to be applied to the motor (M) in the start periods (T-st2, T-st3,...) of all cycles (P2, P3, ...) after the first cycle (P1) until the end of the washing program.

In an embodiment of the present invention, the microcontroller (5) provides the currents that are of equal or close in value to the currents measured in the steady state periods (T-ss1, T-ss2, ...) of the previous-cycle (P1, P2, ... ), which change depending on the load in the drum driven by the motor (M), to be applied to the motor (M) in the start periods (T-st2, T-st3, ...) of all cycles (P2, P3, ...) after the first cycle (P1) until the end of the washing program.

In an embodiment of the present invention, the control circuit (1) controls operation of the motor (M) with field oriented control method and the microcontroller (5) controls operation of the motor (M) in the start periods (T-st1, Tst2, ...) by applying open loop control without receiving feedback signals from the motor (M) and controls operation of the motor (M) in the steady state periods (T-ss1, T-ss2, ...) by applying closed loop control with the feedback signals received from the speed and position estimator (4). The microcontroller (5) measures the phase currents (Ia, Ib, Ic) applied to the motor (M) by the three-phase inverter (3) by separating them into torque component (Iq) and flux component (Id) and provides phase currents (Ia, Ib, Ic) having maximum value torque component (Iq) and zero flux component (Id) to be applied to the motor (M) by the three-phase inverter (3) depending on the torque requirement in the washing program. The flux component (Id) provides the motor (M) to be accelerated, and during the spin-drying step of the washing machine, wherein the motor (M) is used, the torque component (Iq) value of the current is decreased and the flux component (Id) value is increased. The embodiment of the present invention is applicable for the washing process in the washing machine wherein high torque is required at low speed and the values of the phase currents (la, Ib, Ic) applied to the motor (M) are increased/decreased by only adjusting the torque components (Iq) of the phase currents (Ia, Ib, Ic). In an embodiment of the present invention, the microcontroller (5), in the start period (T-st2) of the second cycle (P2), provides torque component (Iq-st2) to be applied to the motor (M) which is equal to the average value of the torque components (Iq-ss1) measured in the steady state period (Tss-1) of the first cycle (P1) or around the average value of the said torque component (Iq-ss1) by monitoring the torque component (Iq) of the phase currents (la, Ib, Ic) applied to the motor (M) in the steady state period (T-ss1) of the first cycle (P1) (Figure 3).

In another embodiment of the present invention, the microcontroller (5) provides torque components (Iq-st2, Iq-st3) to be applied to the motor (M) which are equal to the average value of the torque components (Iq-ss1) measured in the steady state period (Tss-1) of the first cycle (P1) or around the average value of the said torque component (Iq-ss1), in the start periods (T-st2, T-st3, ...) of all the cycles (P2, P3, ..) after the first cycle (P1) (Figure 3).

In another embodiment of the present invention, the microcontroller (5) provides torque components (Iq-st2, Iq-st3, ...) to be applied to the motor (M) which are equal to the average value of the torque components (Iq-ss1, Iq-ss2, ...) measured in the steady state periods (T-ss1, T-ss2, ...) of the previous cycle (P1, P2), or around the average value of the said torque components (Iq-ss1, Iq-ss2, ...), in the start periods (T-st2, T-st3, ...) of all the cycles (P2, P3, ..) after the first cycle (P1) until the end of the washing program.

The microcontroller (5) applies phase currents (Ia, Ib, Ic) having a reference torque component (Iq-ref) and calculated according to the maximum load of the drum driven by the motor (M) in the first start period (T-st1) of the motor (M) and after start motion is accomplished and the motor (M) reaches the constant speed determined for the washing program, measures the torque component (Iq-ss1) of the phase currents (la, Ib, Ic) applied to the motor (M) in the steady state period (T-ss1) of the first cycle (P1). The microcontroller (5) provides the three-phase inverter (3) to apply phase currents (la, Ib, Ic) to the motor (M) having torque components (Iq-st2, Iq-st3, ....) equal or close in value to the torque component (Iq-ss1) in the steady state period (T-ss1) of the first cycle (P1) or the steady state torque components (Iq-ss1, Iq-ss2,...) of the previous cycle (P1, P2..) before each cycle (P2, P3, ...), in the start periods (T-st2, T-st3, ...) of all of the cycles (P2, P3, P4, ...) after the first cycle (P1) until the end of the washing program.

The microcontroller (5) furthermore determines the length of start durations, in other words start periods (T-st2, T-st3, ..) of all the cycles (P2, P3, P4, ...) after the first cycle (P1) to be in direct proportion with the values of torque components (Iq-st2, Iq-st3, ....) applied according to torque component (Iq-ss1) in the first steady state period (T-ss1) at the end of the washing program implemented in the washing machine wherein the motor (M) is used. As the value of the start torque components (Iq-st2, Iq-st3, ....) increase, the start periods (T-st2, T-st3, ...) of the motor (M) in the cycles (P2, P3, P4, ...) after the first cycle (P1) gets longer and as the value of the start torque components (Iq-st2, Iq-st3, ....) decrease, the start periods (T-st2, T-st3, ...) of the motor (M) in the cycles (P2, P3, P4, ...) after the first cycle (P1) decrease.

The control circuit (1) of the present invention applies maximum value start current to the motor (M) in the start period (T-st1) of the first cycle (P1) in the laundry washing program, with a magnitude that can provide start up at every load condition of the drum and applies currents depending on the load determined in the steady state period (T-ss1) of the first cycle (P1) in the start periods (T-st2, T-st3, ...) of the cycles (P2, P3, P4, ...) after the first cycle (P1). The hard starts and overheating of the motor (M) is prevented and energy saving is provided by applying start currents depending on the drum load. In the embodiment of the present invention, start currents are applied to the motor (M) depending on the drum load by only making software changes in the microcontroller (5), utilization of weight sensor and acceleration sensor is not required for control of the current with respect to drum load.

It is to be understood that the present invention is not limited by the embodiments disclosed above and a person skilled in the art can easily introduce different embodiments. These should be considered within the scope of the protection disclosed by the claims of the present invention.

## Claims

1. A control circuit (1) that controls a permanent magnet synchronous motor (M) used in driving the drum in washing machines comprising a converter (2) that converts AC mains voltage to DC voltage, a three-phase inverter (3) that inverts the direct current received from the converter (2) to three phase current (la, Ib, Ic), a speed and position estimator (4) that detects the data relating to position and speed of rotor during start up and operation of the motor (M) and a microcontroller (5) that provides control of the motor (M) by sending sinusoidal switching signals to the three-phase inverter (3) with the signals received from the speed and position estimator (4),
**characterized in that** the microcontroller (5)
- operates the motor (M) during the washing program by implementing, more than one cycle (P1, P2, ...) formed of start periods (T-st1, Tsf2, ...) and steady state periods (T-ss1, T-ss2, ...) after each start period (T-st1, Tst2, ...) wherein the motor (M) operates at constant speed,
- provides current to be applied to the motor (M) with the magnitude to provide start up in maximum load condition in the first start period (T-st1) of the first cycle (P1),
- monitors and measures the currents that change in value depending on the load in the drum driven by the motor (M) in the first steady state period (T-ss1) after the first start period (T-st1) wherein the motor (M) operates at constant speed and
- provides current to be applied to the motor (M) in the start period (T-st2) of the second cycle (P2) that is equal or close in value to the currents measured in the first steady state period (T-ss1).

2. A control circuit (1) as in Claim 1, **characterized in that** the microcontroller (5) provides currents to be applied to the motor (M) in the start periods (T-st2, T-st3, ...) of all the cycles (P2, P3, ...) after the first cycle (P1) that are equal or close in value to the currents measured in the first steady state period (T-ss1).

3. A control circuit (1) as in Claim 1, **characterized in that** the microcontroller (5) provides the currents that are of equal or close in value to the currents measured in the steady state periods (T-ss1, T-ss2, ...) of the previous cycle (P1, P2, ...) to be applied to the motor (M) in the start periods (T-st2, T-st3, ...) of all the cycles (P2, P3, ...) after the first cycle (P1).

4. A control circuit (1) as in any one of the above Claims, **characterized in that** the microcontroller (5) implements open loop control in the start periods (T-st1, Tst2, ...) of the motor (M) and implements closed loop control in the steady state periods (T-ss1, T-ss2, ...) and measures the phase currents (la, Ib, Ic) applied to the motor (M) by the three-phase inverter (3) by separating them into the torque component (Iq) and the flux component (Id).

5. A control circuit (1) as in Claim 4, **characterized in that** the microcontroller (5) applies phase currents (la, Ib, Ic) calculated according to the maximum load of the washing machine drum driven by the motor (M) and having a reference torque component (Iq-ref) in the first start period (T-st1) of the motor (M), measures the torque component (Iq-ss1) of the phase currents (Ia, Ib, Ic) applied to the motor (M) in the steady state period (T-ss1) of the first cycle (P1) and in the start period (T-st2) of the second cycle (P2), provides the torque component (Iq-st2) to be applied to the motor (M) that is equal or close in value to the torque component (Iq-ss1) of the currents in the steady state period (T-ss1) of the first cycle (P1).

6. A control circuit (1) as in Claim 5, **characterized in that** the microcontroller (5) provides torque components (Iq-st2, Iq-st3,) to be applied to the motor (M) that are equal or close in value to the torque components (Iq-ss1) measured in the steady state period (T-ss1) of the first cycle (P1), in the start periods (T-st2, T-st3, ...) of all the cycles (P2, P3, ...) after the first cycle (P1).

7. A control circuit (1) as in Claim 5, **characterized in that** the microcontroller (5) provides the torque components (Iq-st2, Iq-st3, ...) that are equal or close in value to the torque components (Iq-ss1, Iqss2, ...) measured in the steady state periods (T-ss1, T-ss2, ...) of the previous cycle (P1, P2, ...) to be applied to the motor (M) in the start periods (T-st2, T-st3, ...) of all the cycles (P2, P3, ...) after the first cycle (P1).

8. A control circuit (1) as in any one of the above Claims, **characterized in that** the microcontroller (5) determines the length of the start periods (T-st2, T-st3, ..) of all the cycles (P2, P3, P4, ...) after the first cycle (P1) to be in direct proportion with the values of start torque components (Iq-st2, Iq-st3, ....) until the end of the washing program implemented in the washing machine wherein the motor (M) is used.

## Patentansprüche

1. Steuerschaltung (1), die einen Dauermagnetsynchronmotor (M) steuert, der zum Antreiben der Trommel von Waschmaschinen benutzt wird, umfassend einen Wandler (2), der Netzspannung in Gleichspannung umwandelt, einen Dreiphasenumrichter (3), der den Gleichstrom vom Wandler (2) in dreiphasigen Strom (Ia, Ib, Ic) umrichtet, eine Drehzahl- und Positionsschätzeinrichtung (4), die die Daten zur Position und Drehzahl des Rotors beim Starten und während des Betriebs des Motors (M) erkennt, und einen Mikrocontroller (5), der für die Steuerung des Motors (M) sorgt, indem er sinusförmige Schaltsignale an den Dreiphasenumrichter (3) sendet, wobei Signale von der Drehzahl- und Positionsschätzeinrichtung (4) empfangen werden,
**dadurch gekennzeichnet, dass** der Mikrocontroller (5)
- den Motor (M) während des Waschprogramms durch Implementieren von mehr als einem Zyklus (P1, P2, ...) betreibt, die aus Startperioden (T-st1, Tst2, ...) und Dauerzustandsperioden (T-ss1, T-ss2, ...) nach jeder Startperiode (T-st1, Tst2, ...) gebildet sind, wobei der Motor (M) bei konstanter Drehzahl arbeitet,.
- dafür sorgt, dass Strom mit einer Stärke an den Motor (M) angelegt wird, um den Start bei einem maximalen Ladezustand in der ersten Startperiode (T-st1) des ersten Zyklus (P1) zu ermöglichen,
- die Ströme, deren Wert sich abhängig von der Ladung in der vom Motor (M) angetriebenen Trommel ändert, in der ersten Dauerzustandsperiode (T-ss1) nach der ersten Startperiode (T-st1), in der der Motor (M) bei konstanter Drehzahl arbeitet, überwacht und misst und
- dafür sorgt, dass an den Motor (M) in der Startperiode (T-st2) des zweiten Zyklus (P2) Strom angelegt wird, dessen Wert gleich oder annähernd gleich zu den Strömen ist, die in der ersten Dauerzustandsperiode (T-ss1) gemessen wurden.

2. Steuerschaltung (1) nach Anspruch 1, **dadurch gekennzeichnet, dass** der Mikrocontroller (5) dafür sorgt, dass in den Startperioden (T-st2, T-st3, ...) aller Zyklen (P2, P3, ...) nach dem ersten Zyklus (P1) Ströme an den Motor (M) angelegt werden, deren Wert gleich oder annähernd gleich zu den Strömen ist, die in der ersten Dauerzustandsperiode (T-ss1) gemessen wurden.

3. Steuerschaltung (1) nach Anspruch 1, **dadurch gekennzeichnet, dass** der Mikrocontroller (5) dafür sorgt, dass Ströme, deren Wert gleich oder annähernd gleich zu den Strömen ist, die in den Dauerzustandsperioden (T-ss1, T-ss2, ...) des vorherigen Zyklus (P1, P2, ...) gemessen wurden, in den Startperioden (T-st2, T-st3, ...) aller Zyklen (P2, P3, ...) nach dem ersten Zyklus (P1) an den Motor (M) anlegt.

4. Steuerschaltung (1) nach einem der vorangehenden Ansprüche, **dadurch gekennzeichnet, dass** der Mikrocontroller (5) einen offenen Regelkreis in den Startperioden (T-st1, Tst2, ...) des Motors (M) implementiert und einen geschlossenen Regelkreis in den Dauerzustandsperioden (T-ss1, T-ss2, ...) implementiert und die Phasenströme (Ia, Ib, Ic) misst, die vom Dreiphasenumrichter (3) an den Motor (M) angelegt werden, indem er sie in die Drehmomentkomponente (Iq) und die Kraftflusskomponente (Id) unterteilt.

5. Steuerschaltung (1) nach Anspruch 4, **dadurch gekennzeichnet, dass** der Mikrocontroller (5) Phasenströme (Ia, Ib, Ic) anlegt, die gemäß der maximalen Ladung der vom Motor (M) angetriebenen Waschmaschinentrommel berechnet werden und eine Referenzdrehmomentkomponente (Iq-ref) in der ersten Startperiode (T-st1) des Motors (M) aufweisen, die Drehmomentkomponente (Iq-ss1) der Phasenströme (Ia, Ib, Ic) misst, die in der Dauerzustandsperiode (T-ss1) des ersten Zyklus (P1) an den Motor (M) angelegt werden, und in der Startperiode (T-st2) des zweiten Zyklus (P2) dafür sorgt, dass der Wert der Drehmomentkomponente (Iq-st2), die an den Motor (M) angelegt werden soll, gleich oder annähernd gleich zur Drehmomentkomponente (Iq-ss1) der Ströme in der Dauerzustandsperiode (T-ss1) des ersten Zyklus (P1) ist.

6. Steuerschaltung (1) nach Anspruch 5, **dadurch gekennzeichnet, dass** der Mikrocontroller (5) in den Startperioden (T-st2, T-st3, ...) aller Zyklen (P2, P3, ...) nach dem ersten Zyklus (P1) Drehmomentkomponenten (Iq-st2, Iq-st3), die an den Motor (M) angelegt werden sollen, bereitstellt, deren Wert gleich oder annähernd gleich zu den Drehmomentkomponenten (Iq-ss1) ist, die in der Dauerzustandsperiode (T-ss1) des ersten Zyklus (P1) gemessen wurden.

7. Steuerschaltung (1) nach Anspruch 5, **dadurch gekennzeichnet, dass** der Mikrocontroller (5) dafür sorgt, dass die Drehmomentkomponenten (Iq-st2, Iq-st3, ...), deren Wert gleich oder annähernd gleich zu den Drehmomentkomponenten (Iq-ss1, Iqss2, ...) ist, die in den Dauerzustandsperioden (T-ss1, T-ss2, ...) des vorherigen Zyklus (P1, P2, ...) gemessen wurden, in den Startperioden (T-st2, T-st3, ...) aller Zyklen (P2, P3, ...) nach dem ersten Zyklus (P1) an den Motor (M) angelegt werden.

8. Steuerschaltung (1) nach einem der vorangehenden Ansprüche, **dadurch gekennzeichnet, dass** der Mikrocontroller (5) bestimmt, dass die Länge der Startperioden (T-st2, T-st3, ..) aller Zyklen (P2, P3, P4, ...) nach dem ersten Zyklus (P1) direkt proportional zu den Werten der Startdrehmomentkomponenten (Iq-st2, Iq-st3, ....) bis zum Ende des Waschprogramms ist, das in der Waschmaschine implementiert wird, in der der Motor (M) benutzt wird.

## Revendications

1. Une unité de commande (1) qui commande un moteur synchrone à aimant permanent (M) qui est utilisé pour actionner le tambour dans des machines à laver, comprenant un convertisseur (2) qui convertit la tension du réseau à courant alternatif à la tension à courant continu, un onduleur triphasé (3) qui inverse le courant continu reçu à partir du convertisseur (2) à un courant triphasé (Ia, Ib, Ic), un évaluateur de vitesse et de position (4) qui détecte les données relatives à la position et la vitesse du rotor pendant le démarrage et le fonctionnement du moteur (M), et un microcontrôleur (5) qui permet la commande du moteur (M) en envoyant des signaux sinusoïdaux de commutation au onduleur triphasé (3) avec les signaux reçus à partir de l'évaluateur de vitesse et de position (4),
**caractérisée en ce que** le microcontrôleur (5)
- actionne le moteur (M) pendant le programme de lavage en mettant en oeuvre plus d'un cycle (P1, P2, ...) composé de périodes de démarrage (T-st1, Tst2, ...) et de périodes d'état d'équilibre (T-ss1, T-ss2, ...) après chaque période de démarrage (T-st1, Tst2, ...) où le moteur (M) fonctionne à vitesse constante,
- assure qu'un courant est appliqué au moteur (M) avec une magnitude de manière à permettre le démarrage en condition de charge maximale dans la première période de démarrage (T-st1) du premier cycle (P1),
- qui surveille et mesure les courants qui changent de valeur en fonction de la charge dans le tambour entraîné par le moteur (M) dans la première période d'état d'équilibre (T-ss1) après la première période de démarrage (T-st1) où le moteur (M) fonctionne à vitesse constante et
- assure qu'un courant est appliqué au moteur (M) dans la période de démarrage (T-st2) du deuxième cycle (P2) qui est égal aux ou proche des courants mesurés dans la première période d'état d'équilibre (T-ss1).

2. Une unité de commande (1) selon la Revendication 1, **caractérisée en ce que** le microcontrôleur (5) assure que des courants sont appliqués au moteur (M) dans les périodes de démarrage (T-st2, T-st3, ...) de tous les cycles (P2, P3, ...) après le premier cycle (P1), qui sont égaux aux ou proche des courants mesurés dans la première période d'état d'équilibre (T-ss1).

3. Une unité de commande (1) selon la Revendication 1, **caractérisée en ce que** le microcontrôleur (5) assure que les courants, qui sont égaux aux ou proche des courants mesurés dans les périodes d'état d'équilibre (T-ss1, T-ss2, ...) du cycle précédent (P1, P2, ...) sont appliqués au moteur (M) dans les périodes de démarrage (T-st2, T-st3, ...) de tous les cycles (P2, P3, ...) après le premier cycle (P1),

4. Une unité de commande (1) selon l'une quelconque des revendications précédentes, **caractérisée en ce que** le microcontrôleur (5) met en oeuvre un contrôle en boucle ouverte dans les périodes de démarrage (T-st1, Tst2, ...) du moteur (M) et met en oeuvre un contrôle en boucle fermée dans les périodes d'état d'équilibre (T-ss1, T-ss2, ...) et mesure les courants de phase (Ia, Ib, Ic) appliqués au moteur (M) par l'onduleur triphasé (3) en les séparant dans la composante de couple (Iq) et la composante de flux (Id).

5. Une unité de commande (1) selon la Revendication 4, **caractérisée en ce que** le microcontrôleur (5) met en oeuvre des courants de phase (Ia, Ib, Ic) calculés en fonction de la charge maximale du tambour de la machine à laver entraîné par le moteur (M) et présentant une composante de couple de référence (Iq-ref) dans la première période de démarrage (T-st1) du moteur (M), mesure la composante de couple (Iq-ss1) des courants de phase (Ia, Ib, Ic) appliqués au moteur (M) dans la période d'état d'équilibre (T-ss1) du premier cycle (P1) et dans la période de démarrage (T-st2) du deuxième cycle (P2) et assure que la composante de couple (Iq-st2) est appliqué au moteur (M), qui est égale à ou proche de la composante de couple (Iq-ss) des courants dans la période d'état d'équilibre (T-ss1) du premier cycle (P1).

6. Une unité de commande (1) selon la Revendication 5, **caractérisée en ce que** le microcontrôleur (5) assure que des composantes de couple (Iq-st2, Iq-st3,), qui sont égaux aux ou proche des composantes de couple (Iq-ss1) mesurées dans la période d'état d'équilibre (T-ss1) du premier cycle (P1), sont appliquées au moteur (M) dans les périodes de démarrage (T-st2, T-st3, ...) de tous les cycles (P2, P3, ...) après le premier cycle (P1),

7. Une unité de commande (1) selon la Revendication 5, **caractérisée en ce que** le microcontrôleur (5) assure que des composantes de couple (Iq-st2, Iq-st3, ), qui sont égaux aux ou proche des composantes de couple (Iq-ss1, Iqss2, ...) mesurées dans la période d'état d'équilibre (T-ss1, T-ss2, ...) des cycles précédents (P1, P2, ...), sont appliquées au moteur (M) dans les périodes de démarrage (T-st2, T-st3, ...) de tous les cycles (P2, P3, ...) après le premier cycle (P1),

8. Une unité de commande (1) selon l'une quelconque des revendications précédentes, **caractérisée en ce que** le microcontrôleur (5) assure que la durée des périodes de démarrage (T-st2, T-st3, ...) de tous les cycles (P2, P3, P4, ...) après le premier cycle (P1) soit en proportion directe avec les valeurs des composantes de couple de démarrage (Iq-st2, Iq-st3, ...) jusqu'à la fin du programme de lavage mis en oeuvre dans la machine à laver où le moteur (M) est utilisé.
